# EUROPÄISCHE PATENTSCHRIFT

(11) **EP 2 383 081 B1**
(45) Veröffentlichungstag und Bekanntmachung des Hinweises auf die Patenterteilung: **04.06.2014**
(21) Anmeldenummer: 10004507.9
(22) Anmeldetag: 29.04.2010
(51) Int. Cl.: B25J 15/06

(54) **Fertigungsverfahren zur Erzeugung eines Handhabungsproduktes**
Manufacturing method for producing a product to be manipulated
Procédé de fabrication pour produire un produit à manipuler

(43) Veröffentlichungstag der Anmeldung: 02.11.2011
(73) Patentinhaber: Trumpf Sachsen GmbH, 01904 Neukirch (DE)
(72) Erfinder: Busch, Marcus, 01324 Dresden (DE); Poike, Thomas, 01904 Neukirch (DE); Nemuth, Jens, 02681 Wilthen (DE)
(74) Vertreter: Kohler Schmid Möbus

(56) Entgegenhaltungen:
- EP-A1- 0 267 874
- EP-A1- 1 967 301
- EP-A2- 0 396 210
- WO-A2-97/37523

## Beschreibung

Die Erfindung betrifft ein Fertigungsverfahren, im Laufe dessen
- durch trennendes Bearbeiten mittels einer Trenneinrichtung aus einem plattenartigen Werkstück, insbesondere aus einem Blech, als zu handhabendes Trennprodukt ein Handhabungsprodukt erzeugt wird und
- das Handhabungsprodukt mittels einer Handhabungsvorrichtung gehandhabt wird, die wenigstens eine Saugeinrichtung mit einem Unterdruckraum aufweist, wobei die Saugeinrichtung und das Handhabungsprodukt aneinander angelegt werden und das Handhabungsprodukt aufgrund eines Unterdruckes, der in dem Unterdruckraum der an ihm anliegenden Saugeinrichtung herrscht, an dieser Saugeinrichtung gehalten wird,
- wobei eine Handhabungsvorrichtung mit wenigstens einer adaptiven Saugeinrichtung verwendet wird,
- wobei die adaptive Saugeinrichtung und das Handhabungsprodukt über eine Adapterplatte der adaptiven Saugeinrichtung aneinander angelegt werden, die zwischen dem an einer Basiseinheit der adaptiven Saugeinrichtung vorgesehenen Unterdruckraum der adaptiven Saugeinrichtung und dem Handhabungsprodukt angeordnet ist und die wenigstens eine Aussparung aufweist, mit einer Aussparungsgeometrie, die auf das Handhabungsprodukt derart abgestimmt ist, dass die Aussparung(en) bei an das Handhabungsprodukt angelegter adaptiver Saugeinrichtung von dem Handhabungsprodukt überdeckt wird bzw. werden und der in dem Unterdruckraum der adaptiven Saugeinrichtung herrschende Unterdruck über die Aussparung(en) der Adapterplatte auf das Handhabungsprodukt einwirkt und
- wobei, ehe das Handhabungsprodukt mittels der Handhabungsvorrichtung gehandhabt wird, die Handhabungsvorrichtung hergestellt wird, indem die Adapterplatte der adaptiven Saugeinrichtung mit der auf das Handhabungsprodukt abgestimmten Aussparungsgeometrie durch trennendes Bearbeiten mittels der Trenneinrichtung aus einem plattenartigen Werkstück, insbesondere aus einem Blech, erzeugt und an der Basiseinheit der adaptiven Saugeinrichtung angebracht wird.

Ein derartiges Fertigungsverfahren ist bekannt aus WO 97/37523 A2. Diese Druckschrift offenbart ein Verfahren zum "rapid prototyping", im Rahmen dessen individuell zugeschnittene Einzellagen unter Ausbildung eines zu erstellenden Objektes übereinander gestapelt werden. Zum Stapeln der Einzellagen dient ein Sauggreifer, der die zu handhabende Einzellage nach deren Zuschnitt von einem Werkstücktisch einer Laserschneideinrichtung aufnimmt. Damit sich im Innern des Sauggreifers der zum Ansaugen der Einzellage erforderliche Unterdruck aufbauen kann, muss die Saugergeometrie auf die Geometrie der zu fixierenden Einzellage abgestimmt sein. Im Einzelnen müssen an der Werkstückseite des Sauggreifers Ansaugöffnungen derart angeordnet sein, dass sie sich bei an der Einzellage angelegtem Sauggreifer über einem von Durchtrittsöffnungen freien Bereich der Einzellage befinden. Dies wird mittels einer Saugmaske erreicht, die an einem Grundkörper des Sauggreifers werkstückseitig angebracht ist und die eine an die Geometrie der zu handhabenden Einzellage angepasste Lochung aufweist. Vor dem Zuschneiden der später zu handhabenden Einzellage wird an der Laserschneideinrichtung zunächst eine an die Geometrie der zu handhabenden Einzellage angepasste Saugmaske aus einer Platte ausgeschnitten und anschließend mittels des Sauggreifers von dem Werkstücktisch der Laserschneideinrichtung abgenommen und abseits der Laserschneideinrichtung zwischengelagert. Nach dem Ablegen der Saugmaske nimmt der Sauggreifer eine andere Platte auf, die er dann auf dem Werkstücktisch der Laserschneideinrichtung ablegt. Mittels der Laserschneideinrichtung wird aus der anderen Platte die für das rapid prototyping benötigte Einzellage zugeschnitten. Während des Zuschnitts der Einzellage wird die zuvor abseits der Laserschneideinrichtung abgelegte Saugmaske wieder an dem Sauggreifer angebracht. Der mit der Saugmaske versehene Sauggreifer nimmt schließlich die Einzellage nach Beendigung ihres Zuschnittes an dem Werkstücktisch der Laserschneideinrichtung auf, von wo aus die Einzellage an den Ort transportiert wird, an dem sie mit weiteren Einzellagen das zu erstellende Objekt bildet.

Eine Handhabungsvorrichtung sowie eine Fertigungsanordnung sind offenbart in EP 1 967 301 A1. Im Falle des Standes der Technik dient eine Handlingvorrichtung dazu, Fertigteile oder Bearbeitungsreste aus dem Nahbereich einer als Stanzkopf oder als Laserschneidkopf ausgeführten Bearbeitungseinrichtung abzuführen. Zu diesem Zweck weist die Handlingvorrichtung einen Saugerrahmen mit einer Mehrzahl von Vakuumsaugern auf. Als Vakuumsauger kommen herkömmliche Sauggreifer zum Einsatz, die mit einem flexiblen Saugnapf an das zu handhabende Bearbeitungsprodukt angelegt werden und dieses aufgrund eines im Innern des Saugnapfes erzeugten Unterdruckes halten. Die einzelnen Vakuumsauger sind zu Saugerfeldern gruppiert, deren Geometrie auf die Geometrie der zu handhabenden Bearbeitungsprodukte abgestimmt ist. Ebenfalls in Abhängigkeit von der Geometrie der zu handhabenden Bearbeitungsprodukte werden die Vakuumsauger der Saugerfelder aktiviert, d.h. auf eine Unterdruckquelle aufgeschaltet. Es ist sicherzustellen, dass ein Vakuum nur an denjenigen Sauggreifern erzeugt wird, welche einen geschlossenen Bereich des betreffenden Bearbeitungsproduktes überdecken.

Die Aufgabe der vorliegenden Erfindung besteht darin, ein Fertigungsverfahren bereitzustellen, in welches die Herstellung der für das Handling von Handhabungsprodukten benötigten Handhabungsvorrichtung in besonderem Maße integriert ist.

Erfindungsgemäß gelöst wird diese Aufgabe durch das Fertigungsverfahren nach Patentanspruch 1.

Das Konzept der Erfindung impliziert, dass an der Handhabungsvorrichtung wenigstens eine adaptive Saugeinrichtung vorgesehen ist. Adaptive Seugeinrichtungen an sich sind bekannt. Anders als herkömmliche Vakuumsauger weisen adaptive Saugeinrichtungen keine flexiblen Saugnäpfe zur Anlage an dem betreffenden Handhabungsprodukt auf. Stattdessen werden adaptive Saugeinrichtungen über eine Adapterplatte an das Handhabungsprodukt angelegt. Die Adapterplatte ist mit wenigstens einer Aussparung versehen, die mit dem Unterdruckraum in der Basiseinheit der adaptiven Saugeinrichtung in Verbindung steht. Über die Aussparung(en) der Adapterplatte wirkt der in dem Unterdruckraum der adaptiven Saugeinrichtung herrschende Unterdruck auf das Handhabungsprodukt. Die Aussparungsgeometrie der Adapterplatte ist derart an das festzulegende Handhabungsprodukt angepasst, dass die Aussparung(en) bei an das Handhabungsprodukt angelegter adaptiver Saugeinrichtung von dem Handhabungsprodukt überdeckt wird bzw. werden. An dem Handhabungsprodukt vorgesehene Öffnungen, beispielsweise Lochstrukturen, sind außerhalb der Aussparung(en) der Adapterplatte angeordnet. Dadurch ist gewährleistet, dass die adaptive Saugeinrichtung aufgrund des in ihrem Unterdruckraum herrschenden Unterdrucks das Handhabungsprodukt mit einer für die Handhabung des Handhabungsproduktes ausreichenden Haltekraft festlegt.

Die Verwendung wenigstens einer adaptiven Saugeinrichtung ist insofern von Bedeutung, als sie es ermöglicht, dass die Handhabungsvorrichtung sich zum Teil quasi selbst fertigt. In "Eigenfertigung" hergestellt wird die Adapterplatte der adaptiven Saugeinrichtung(en).

Im Rahmen des Fertigungsverfahrens werden plattenartige Werkstücke, insbesondere Bleche, trennend bearbeitet. Dabei werden Handhabungsprodukte erzeugt, die mittels einer Handhabungsvorrichtung gehandhabt, beispielsweise nach ihrer Fertigung aus dem Nahbereich der betreffenden Trenneinrichtung abgeführt werden müssen. Wird eine Handhabungsvorrichtung mit wenigstens einer adaptiven Saugeinrichtung verwendet, so kann vor Beginn der eigentlichen Werkstückbearbeitung unter Nutzung der hierfür vorgesehenen Einrichtungen zunächst ein Teil der Handhabungsvorrichtung, nämlich die Adapterplatte der wenigstens einen adaptiven Saugeinrichtung der Handhabungsvorrichtung, hergestells werden. Die benötigte Handhabungsvorrichtung beziehungsweise deren Saugkonfiguration wird auf derselben Maschine hergestellt, auf welcher später die Handhabungsprodukte erzeugt werden. Zur Herstellung der Adapterplatte dient dieselbe Trenneinrichtung, die zu einem späteren Zeitpunkt die letztlich zu handhabenden Handhabungsprodukte erstellt. Auf diese Art und Weise wird die Herstellung der Handhabungsvorrichtung zu einem Teil des Fertigungsverfahrens. Unmittelbar vor dem Handhaben von Handhabungsprodukten wird die Handhabungsvorrichtung mit einer Adapterplatte und einer Aussparungsgeometrie der Adapterplatte hergestellt, die auf das oder die zu handhabenden Handhabungsprodukte abgestimmt ist.

Die teilweise Eigenfertigung der Handhabungsvorrichtung ist in das übergeordnete Fertigungsverfahren integriert.

Besonders weitgehend ist die Integration der Herstellung der Handhabungsvorrichtung in das übergeordnete Fertigungsverfahren deshalb, weil die Adapterplatte bei der Herstellung der Handhabungsvorrichtung aus demselben plattenartigen Werkstück, gegebenenfalls aus demselben Blech, erzeugt wird wie das später zu handhabende Handhabungsprodukt.

Das Fertigungsverfahren gemäß Patentanspruch 1 setzt nicht notwendigerweise voraus, dass das plattenartige Werkstück, gegebenenfalls das Blech, aus welchem die Adapterplatte der Handhabungsvorrichtung zu fertigen ist, mittels der Tragstruktur der Handhabungsvorrichtung zu der Trenneinrichtung transferiert wird.

Besondere Ausführungsarten des Fertigungsverfahrens nach Patentanspruch 1 ergeben sich aus den abhängigen Patentansprüchen.

Gemäß Patentanspruch 2 wird vor dem Erzeugen der Adapterplatte an einer mit der Basiseinheit versehenen Tragstruktur der Handhabungsvorrichtung wenigstens eine funktionsfähige Saugeinrichtung beliebiger Bauart angebracht. In jedem Fall vorgesehen wird eine Basiseinheit einer noch keiner Adapterplatte aufweisenden und daher noch unvollständigen adaptiven Saugeinrichtung. Bereits eine noch unvollständige adaptive Saugeinrichtung kann in der Lage sein, ein Werkstück zu halten. Zusätzlich zu der noch unvollständigen adaptiven Saugeinrichtung können weitere noch unvollständige oder vollständige adaptive Saugeinrichtungen oder Saugeinrichtungen anderer Bauart an der Tragstruktur der Handhabungsvorrichtung montiert werden. Ein plattenartiges Werkstück, insbesondere ein Blech, wird anschließend mittels der funktionsfähigen Saugeinrichtung(en) an der Tragstruktur der Handhabungsvorrichtung festgelegt und mittels der Tragstruktur zu einer Trenneinrichtung transportiert. Dort wird aus dem plattenartigen Werkstück, gegebenenfalls aus dem Blech, die Adapterplatte für die noch unvollständige adaptive Saugeinrichtung mit der auf die nachfolgende Anwendung abgestimmten Aussparungsgeometrie hergestellt. Nach ihrer Herstellung wird die Adapterplatte an der Basiseinheit der betreffenden bis dato noch unvollständigen adaptiven Saugeinrichtung angebracht.

Gemäß Patentanspruch 3 werden die Bewegungsmöglichkeiten der Tragstruktur der Handhabungsvorrichtung bei der Herstellung der Handhabungsvorrichtung auch dazu genutzt, um die in Eigenfertigung erstellte Adapterplatte an der Basiseinheit der betreffenden noch unvollständigen adaptiven Saugeinrichtung anzubringen.

Ist die Adapterplatte lösbar an der Basiseinheit der betreffenden adaptiven Saugeinrichtung angebracht, so lässt sich die Handhabungsvorrichtung bzw. deren Herstellung auf einfache Art und Weise an wechselnde Anwendungserfordernisse anpassen (Patentanspruch 4). Sofern eine neue Anwendung dies erfordert, kann eine Adapterplatte mit geringem Aufwand gegen eine auf den neuen Anwendungsfall abgestimmte Adapterplatte ausgetauscht werden. Erfindungsgemäß bevorzugt wird eine lösbare magnetische Verbindung zwischen der Adapterplatte und der zugehörigen Basiseinheit.

In mehrerlei Hinsicht kann es zweckmäßig sein, die Adapterplatte werkstückseitig mit einem Belag zu versehen (Patentanspruch 5). Ein derartiger Belag kann beispielsweise eine Kratzerbildung an den Handhabungsprodukten vermeiden. Insbesondere dient der werkstückseitige Belag der Adapterplatte dazu, die Aussparung(en) der Adapterplatte bei Anlage der Adapterplatte an einem Handhabungsprodukt abzudichten. Aufgrund einer derartigen Abdichtung kann von der betreffenden adaptiven Saugeinrichtung über die Adapterplatte eine hinreichende Haltekraft auf das zu fixierende Handhabungsprodukt ausgeübt werden.

Im Interesse einer Herstellungsvereinfachung ist erfindungsgemäß vorgesehen, dass der werkstückseitige Belag an der Adapterplatte derart angebracht wird, dass er auch die Aussparung(en) der Adapterplatte wenigstens teilweise überdeckt (Patentanspruch 6). Insbesondere besteht die Möglichkeit, die Adapterplatte vollflächig mit einem werkstückseitigen Belag zu versehen. Es entfällt dann die Notwendigkeit, für den werkstückseitigen Belag die Aussparung(en) der Adapterplatte zu berücksichtigen. Damit der werkstückseitige Belag der Adapterplatte den Aufbau der erforderlichen Haltekraft zwischen der adaptiven Saugeinrichtung und dem Handhabungsprodukt nicht beeinträchtigt, ist der werkstückseitige Belag im Bereich der Aussparung(en) der Adapterplatte in Richtung auf den Unterdruckraum durchlässig.

Die Patentansprüche 7 und 8 betreffen erfindungsgemäße Maßnahmen zur zeitlichen Parallelisierung der Herstellung der Handhabungsvorrichtung einerseits und von Verfahrensschritten der eigentlichen Werkstückbearbeitung andererseits.

Nachfolgend wird die Erfindung anhand beispielhafter schematischer Darstellungen näher erläutert. Es zeigen:
- Fig. 1: eine Fertigungsanordnung umfassend eine Stanzmaschine sowie eine Automatisierungseinheit mit einer Handhabungsvorrichtung,
- Fig. 2: eine perspektivische Darstellung der Handhabungsvorrichtung gemäß Figur 1,
- Fig. 3: den mit einer vollständigen adaptiven Saugeinrichtung versehenen Teilbereich der Handhabungsvorrichtung gemäß Figur 2 in der Ansicht von unten und
- Fign. 4 bis 9: Darstellungen zur Veranschaulichung der Herstellung einer Handhabungsvorrichtung der in den Figuren 1 bis 3 gezeigten Art.

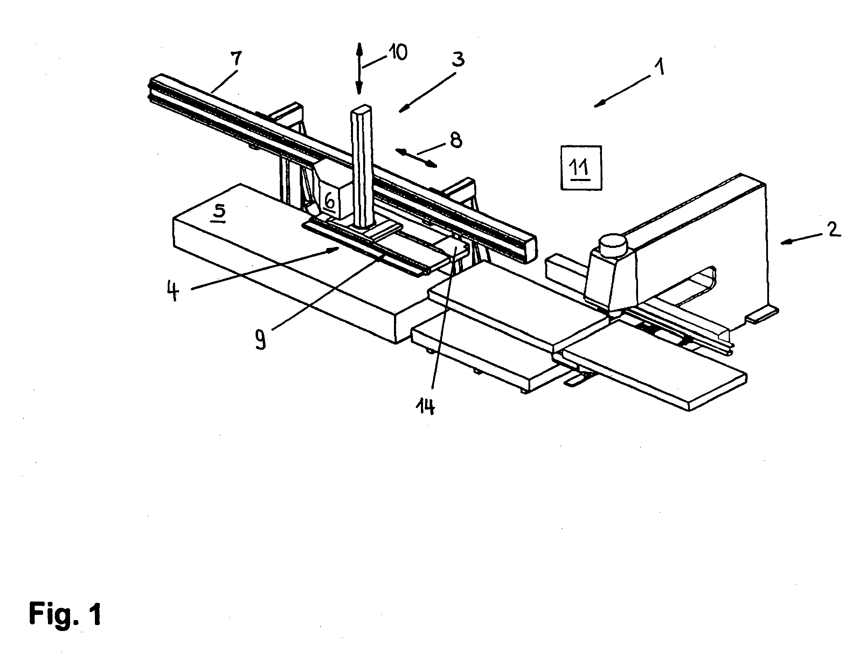

Gemäß Figur 1 umfasst eine Fertigungsanordnung 1 eine Trenneinrichtung in Form einer herkömmlichen Stanzmaschine 2 sowie eine Automatisierungseinheit 3 mit einer Handhabungsvorrichtung 4. Die Stanzmaschine 2 dient zur trennenden Blechbearbeitung. Mittels der Handhabungsvorrichtung 4 werden der Stanzmaschine 2 im Rahmen eines entsprechenden Fertigungsverfahrens zu bearbei-tende Werkstücke von einem Rohblechtisch 5 zugeführt. Nach der Bearbeitung werden an der Stanzmaschine 2 erstellte Fertigteile von der Handhabungsvorrichtung 4 als Handhabungsprodukte aufgenommen und aus dem Nahbereich der Stanzmaschine 2 abtransportiert.

Bei ihren Bewegungen relativ zu dem Rohblechtisch 5 und der Stanzmaschine 2 ist die Handhabungsvorrichtung 4 über einen Schlitten 6 an einem Führungsgerüst 7 der Automatisierungseinheit 3 in Richtung eines Doppelpfeils 8 geführt. Eine von einem Saugerrahmen 9 gebildete Tragstruktur der Handhabungsvorrichtung 4 ist an dem Schlitten 6 in Richtung eines Doppelpfeils 10 heb- und senkbar gelagert. Sowohl die Bewegungen des Schlittens 6 in Richtung des Doppelpfeils 8 als auch die Bewegungen des Saugerrahmens 9 in Richtung des Doppelpfeils 10 werden motorisch angetrieben ausgeführt. Eine andeutungsweise dargestellte numerische Anordnungssteuerung 11 steuert die wesentlichen Funktionen der Automatisierungseinheit 3 und auch der Stanzmaschine 2.

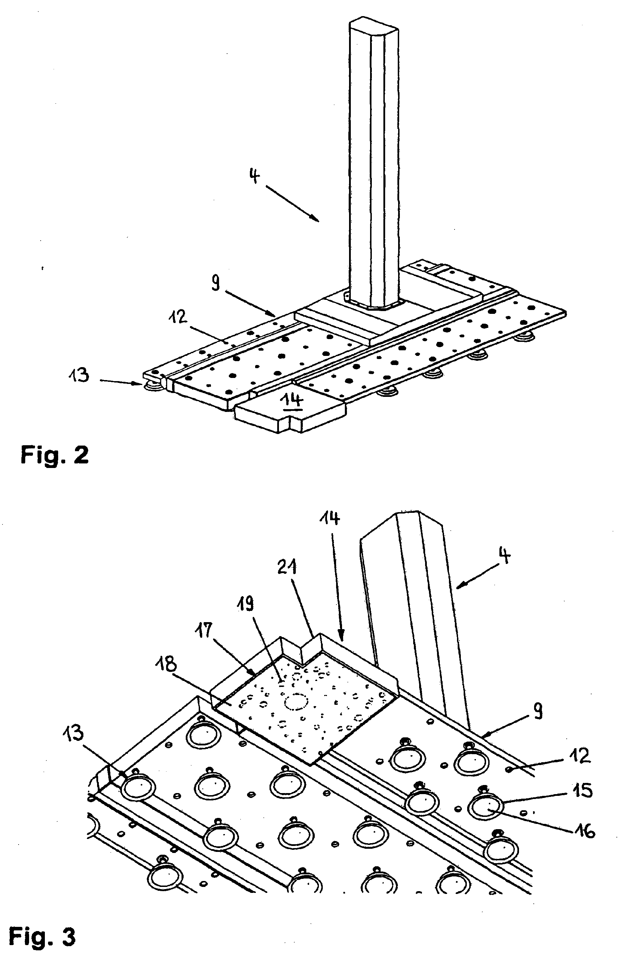

Wie in den Figuren 2 und 3 dargestellt, ist der Saugerrahmen 9 als Lochplatte mit einer Vielzahl von Befestigungsöffnungen 12 ausgeführt. Die Befestigungsöffnungen 12 dienen zur Fixierung von Saugeinrichtungen in Form herkömmlicher Vakuumsauggreifer 13. Außerdem ist der Saugerrahmen 9 mit einer adaptiven Saugeinrichtung 14 versehen. Weitere adaptive Saugeinrichtungen sind denkbar.

Die Vakuumsauggreifer 13 besitzen wie üblich einen elastischen Saugnapf 15, dessen Unterdruckraum 16 mit einer als Unterdruckquelle fungierenden Vakuumpumpe verbunden werden kann. In Abhängigkeit von der Geometrie der zu halternden Produkte werden die einzelnen Vakuumsauggreifer 13 über den Saugerrahmen 9 verteilt und an den entsprechenden Befestigungsöffnungen 12 in herkömmlicher Weise durch Verschrauben montiert.

Anders als die Vakuumsauggreifer 13 wird die adaptive Saugeinrichtung 14 nicht über einen elastischen Saugnapf sondern vielmehr über eine Adapterplatte 17 an dem zu handhabenden Gut angelegt. Bei der Adapterplatte 17 handelt es sich um eine ebene Platte, die in dem gezeigten Beispielsfall aus Blech gefertigt ist. Die Adapterplatte 17 ist vorliegend mit einem werkstückseitigen Kontaktkörper bzw. Belag 18 aus Schaumstoff versehen. Der Belag 18 ist vollflächig mit der Adapterplatte 17 verklebt und bedeckt folglich auch Aussparungen 19 der Adapterplatte 17. Aufgrund der Überdeckung durch den Belag 18 sind die Aussparungen 19 der Adapterplatte 17 in Figur 3 kontrastarm eingezeichnet.

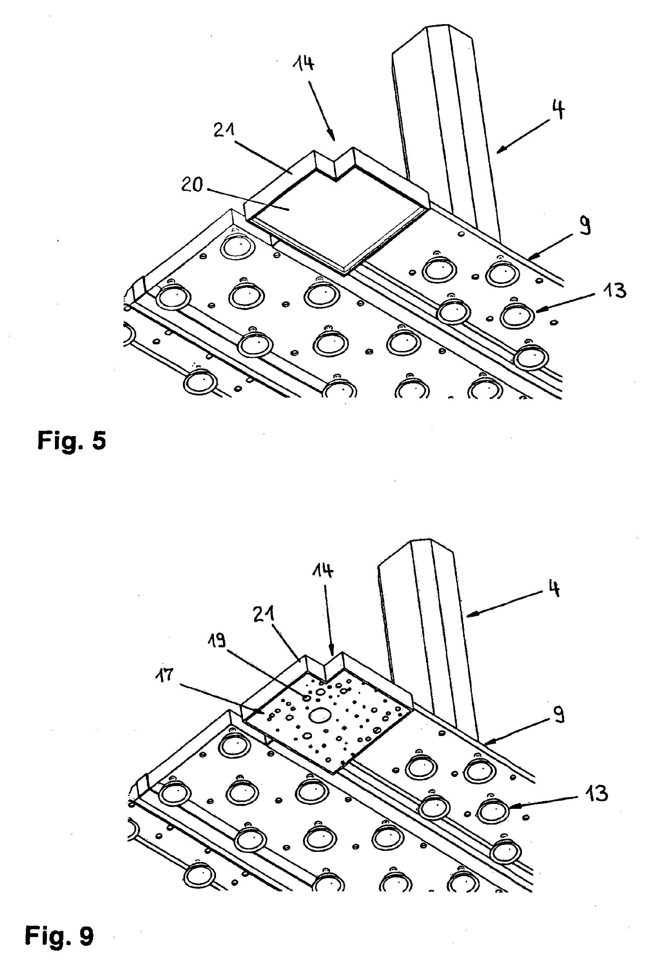

Die Adapterplatte 17 bildet die werkstückseitige Begrenzung eines Unterdruckraums 20 (Figur 5), der im Innern einer an dem Saugerrahmen 9 angebrachten Basiseinheit 21 der adaptiven Saugeinrichtung 14 vorgesehen ist. Mit der Basiseinheit 21 der adaptiven Saugeinrichtung 14 ist die Adapterplatte 17 lösbar verbunden. Als lösbare Verbindung ist in dem dargestellten Beispielsfall eine magnetische Verbindung zwischen der aus magnetischem Werkstoff bestehenden Adapterplatte 17 und dem magnetisierten Rand der Basiseinheit 21 vorgesehen. Ebenso wie der Unterdruckraum 16 der Vakuumsauggreifer 13 kann auch der Unterdruckraum 20 der adaptiven Saugeinrichtung 14 mit einer nicht gezeigten Vakuumpumpe herkömmlicher Bauart verbunden werden.

An den mittels der adaptiven Saugeinrichtung 14 zu fixierenden Handhabungsprodukten wird ein im Innern des Unterdruckraums 20 herrschender Unterdruck über die Aussparungen 19 der Adapterplatte 17 und durch den Belag 18 hindurch angelegt. Zu diesem Zweck ist der Belag 18 der Adapterplatte 17 in Richtung auf den Unterdruckraum 20 der adaptiven Saugeinrichtung 14 luftdurchlässig. Bei an der Adapterplatte 17 anliegendem Handhabungsprodukt dichtet der Belag 18 die Aussparungen 19 der Adapterplatte 17 seitlich ab. Dadurch sorgt der Belag 18 dafür, dass die adaptive Saugeinrichtung 14 eine hinreichende Haltekraft auf das betreffende, der Einfachheit halber nicht dargestellte Handhabungsprodukt ausüben kann.

Die Aussparungsgeometrie der Adapterplatte 17 ist auf die zu fixierenden Handhabungsprodukte abgestimmt. Die Größe der Aussparungen 19 und deren Verteilung über die Adapterplatte 17 wird derart gewählt, dass sich die Aussparungen 19 bei an der Adapterplatte 17 anliegendem Handhabungsprodukt über geschlossenen Bereichen des Handhabungsproduktes befinden. Dadurch ist sichergestellt, dass der im Innern des Unterdruckraums 20 der adaptiven Saugeinrichtung 14 herrschende Unterdruck an das Handhabungsprodukt angelegt werden kann. Durch entsprechende Wahl der Aussparungsgeometrie kann selbst bei Handhabungsprodukten mit zahlreichen und/oder eng beieinander liegenden Öffnungen mittels der adaptiven Saugeinrichtung 14 eine hinreichende Haltekraft auf das Handhabungsprodukt ausgeübt werden.

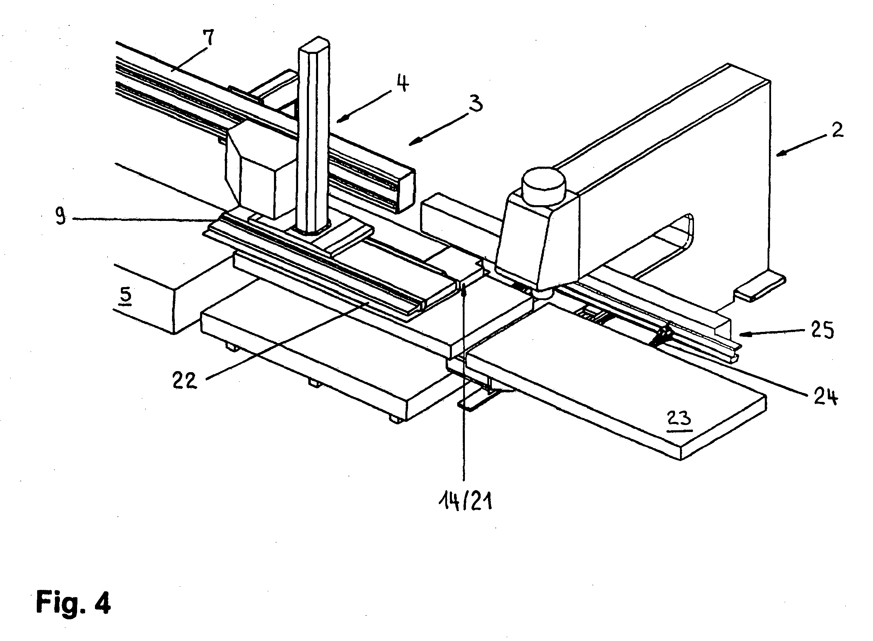

Die Herstellung der Handhabungsvorrichtung 4 lässt sich anhand der Figuren 4 bis 9 nachvollziehen.

Zunächst werden an dem Saugerrahmen 9 funktionsfähige Vakuumsauggreifer 13 montiert. Außerdem wird an dem Saugerrahmen 9 die Basiseinheit 21 einer adaptiven Saugeinrichtung 14 ohne Adapterplatte 17 angebracht. Die adaptive Saugeinrichtung 14 befindet sich demnach in dem noch unvollständigen Zustand gemäß Figur 5. Sie ist aber gleichwohl in der Lage, Werkstücke, welche die Basiseinheit 21 überdecken, anzusaugen.

Anschließend nimmt der Saugerrahmen 9 mittels der funktionsfähigen Vakuumsauggreifer 13 und der noch unvollständigen adaptiven Saugeinrichtung 14 ein unbearbeitetes Blech 22 an dem Rohblechtisch 5 der Automatisierungseinheit 3 auf. Das an dem Saugerrahmen 9 gehaltene Blech 22 wird dann mittels der entlang dem Führungsgerüst 7 verfahrenden Handhabungsvorrichtung 4 zu der Stanzmaschine 2 transportiert. In dieser Betriebsphase ist die Fertigungsanordnung 1 in Figur 4 gezeigt.

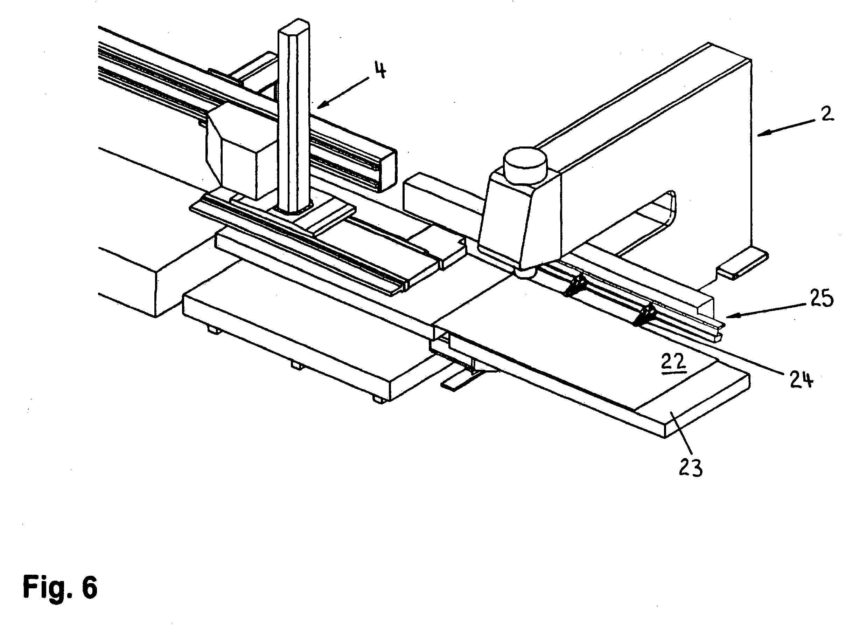

An der Stanzmaschine 2 wird das unbearbeitete Blech 22 in üblicher Weise auf einem Werkstücktisch 23 der Stanzmaschine 2 abgelegt und von Spannpratzen 24 einer herkömmlichen Koordinatenführung 25 der Stanzmaschine 2 ergriffen. Die Handhabungsvorrichtung 4 verfährt danach aus dem Arbeitsbereich der Stanzmaschine 2 (Figur 6).

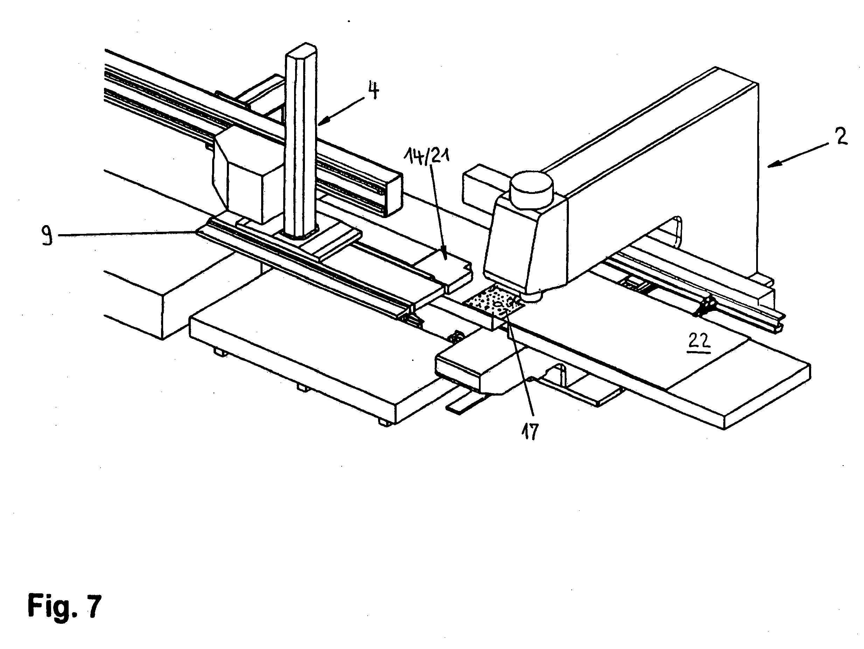

Gemäß Figur 7 trennt die Stanzmaschine 2 anschließend aus dem Blech 22 die Adapterplatte 17 für die an dem Saugerrahmen 9 angebrachte Basiseinheit 21 der adaptiven Saugeinrichtung 14. Dabei wird die Adapterplatte 17 mit einer Aussparungsgeometrie gefertigt, die an die später mittels der adaptiven Saugeinrichtung 14 zu handhabenden Handhabungsprodukte angepasst ist. Die hierfür erforderlichen Daten zur Steuerung der Stanzmaschine 2 bzw. der Koordinatenführung 25 sind in der numerischen Anordnungssteuerung 11 hinterlegt.

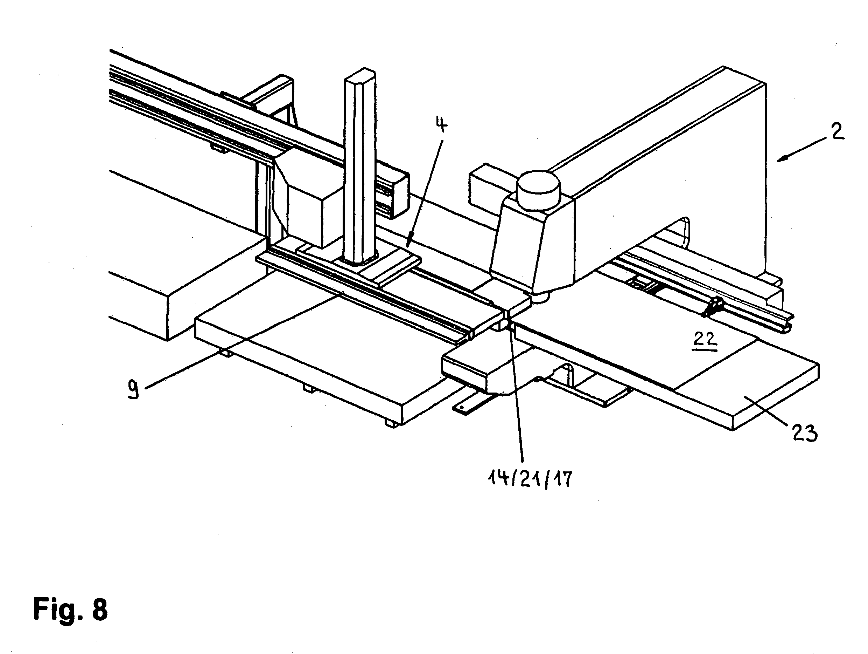

Nach Fertigstellung der Adapterplatte 17 wird die Basiseinheit 21 der noch unvollständigen adaptiven Saugeinrichtung 14 mittels des Saugerrahmens 9 zu der auf dem Werkstücktisch 23 der Stanzmaschine 2 liegenden Adapterplatte 17 bewegt. Die Basiseinheit 21 an dem Saugerrahmen 9 wird dabei zunächst über der Adapterplatte 17 derart positioniert, dass die Adapterplatte 17 nach dem anschließenden Absenken des Saugerrahmens 9 an der Basiseinheit 21 ihre Sollposition einnimmt (Figur 8). Sobald die Basiseinheit 21 auf der Adapterplatte 17 aufsetzt, wird die magnetische Verbindung zwischen dem werkstückseitigen Rand der Basiseinheit 21 und der Adapterplatte 17 selbsttätig wirksam. Die Adapterplatte 17 ist damit lösbar an der Basiseinheit 21 der adaptiven Saugeinrichtung 14 festgelegt. Die Handhabungsvorrichtung 4 befindet sich nun in dem Fertigungszustand gemäß Figur 9. Die magnetische Verbindung zwischen der Adapterplatte 17 und der Basiseinheit 21 der adaptiven Saugeinrichtung 14 ist derart lastaufnahmefähig, dass sie durch Handhabungsprodukte, die an der Adapterplatte 17 anhaften, nicht gelöst wird.

Im letzten Schritt wird auf die an der Basiseinheit 21 der adaptiven Saugeinrichtung 14 gehaltene Adapterplatte 17 der Belag 18 aufgebracht. Dies kann auf unterschiedliche Art und Weise erfolgen.

Beispielsweise besteht die Möglichkeit, die Adapterplatte 17 mit einem Klebstoff zu bestreichen oder zu besprühen und anschließend einen entsprechend der Umrissform der Adapterplatte 17 zugeschnittenen Belag 18 auf die Adapterplatte 17 aufzubringen. Das Aufbringen ist manuell möglich. Alternativ besteht die Möglichkeit, die an der Basiseinheit 21 angebrachte Adapterplatte 17 durch Verfahren des Saugerrahmens 9 zu einem nahe der Stanzmaschine 2 vorgehaltenen Belag 18 zu bewegen und unter Absenken des Saugerrahmens 9 auf den Belag 18 aufzusetzen. Im endgültig funktionsfähigen Zustand sind die adaptive Saugeinrichtung 14 und die Handhabungsvorrichtung 4 in Figur 3 dargestellt.

Unmittelbar im Anschluss an die Herstellung der Handhabungsvorrichtung 4 kann diese dazu genutzt werden, von der Stanzmaschine 2 Handhabungsprodukte, beispielsweise Fertigteile, abzuführen. Diese Fertigteile können aus demselben Blech 22 erzeugt werden, aus dem zuvor die Adapterplatte 17 ausgeschnitten worden ist.

Es besteht die Möglichkeit, Fertigungsschritte bei der Herstellung der Handhabungsvorrichtung 4 zu parallelisieren mit der durchzuführenden Bearbeitung des Bleches 22 oder eines anderen plattenartigen Werkstückes. Etwa während der Belag 18 auf die Adapterplatte 17 aufgebracht wird, kann an der Stanzmaschine 2 bereits ein mittels der Handhabungsvorrichtung 4 abzuführendes Fertigteil erstellt werden.

Ändert sich die Bearbeitungsaufgabe und ist damit eine Änderung der Gestalt der mittels der Handhabungsvorrichtung 4 zu handhabenden Handhabungsprodukte verbunden, so kann die Adapterplatte 17 gegen eine auf die neue Bearbeitungsaufgabe abgestimmte Adapterplatte ausgetauscht werden.

Zu diesem Zweck ist zunächst die Adapterplatte 17 mit dem Belag 18 von der Basiseinheit 21 abzunehmen. Anschließend kann in der vorstehend beschriebenen Weise die für die neue Bearbeitungsaufgabe benötigte Adapterplatte gefertigt und an der Basiseinheit 21 der adaptiven Saugeinrichtung 14 angebracht werden.

## Patentansprüche

1. Fertigungsverfahren, im Laufe dessen
• durch trennendes Bearbeiten mittels einer Trenneinrichtung (2) aus einem plattenartigen Werkstück, insbesondere aus einem Blech (22), als zu handhabendes Trennprodukt ein Handhabungsprodukt erzeugt wird und
• das Handhabungsprodukt mittels einer Handhabungsvorrichtung (4) gehandhabt wird, die wenigstens eine Saugeinrichtung (13, 14) mit einem Unterdruckraum (16, 20) aufweist, wobei die Saugeinrichtung (13, 14) und das Handhabungsprodukt aneinander angelegt werden und das Handhabungsprodukt aufgrund eines Unterdruckes, der in dem Unterdruckraum (16, 20) der an ihm anliegenden Saugeinrichtung (13, 14) herrscht, an dieser Saugeinrichtung (13, 14) gehalten wird,
• wobei eine Handhabungsvorrichtung (4) mit wenigstens einer adaptiven Saugeinrichtung (14) verwendet wird,
• wobei die adaptive Saugeinrichtung (14) und das Handhabungsprodukt über eine Adapterplatte (17) der adaptiven Saugeinrichtung (14) aneinander angelegt werden, die zwischen dem an einer Basiseinheit (21) der adaptiven Saugeinrichtung (14) vorgesehenen Unterdruckraum (20) der adaptiven Saugeinrichtung (14) und dem Handhabungsprodukt angeordnet ist und die wenigstens eine Aussparung (19) aufweist, mit einer Aussparungsgeometrie, die auf das Handhabungsprodukt derart abgestimmt ist, dass die Aussparung(en) (19) bei an das Handhabungsprodukt angelegter adaptiver Saugeinrichtung (14) von dem Handhabungsprodukt überdeckt wird bzw. werden und der in dem Unterdruckraum (20) der adaptiven Saugeinrichtung (14) herrschende Unterdruck über die Aussparung(en) (19) der Adapterplatte (17) auf das Handhabungsprodukt einwirkt und
• wobei, ehe das Handhabungsprodukt mittels der Handhabungsvorrichtung (4) gehandhabt wird, die Handhabungsvorrichtung (4) hergestellt wird, indem die Adapterplatte (17) der adaptiven Saugeinrichtung (14) mit der auf das Handhabungsprodukt abgestimmten Aussparungsgeometrie durch trennendes Bearbeiten mittels der Trenneinrichtung (2) aus einem plattenartigen Werkstück, insbesondere aus einem Blech (22), erzeugt und an der Basiseinheit (21) der adaptiven Saugeinrichtung (14) angebracht wird,
**dadurch gekennzeichnet, dass**
ehe das Handhabungsprodukt mittels der Handhabungsvorrichtung (4) gehandhabt wird, die Handhabungsvorrichtung (4) hergestellt wird, indem die Adapterplatte (17) der adaptiven Saugeinrichtung (14) mit der auf das Handhabungsprodukt abgestimmten Aussparungsgeometrie durch trennendes Bearbeiten mittels der Trenneinrichtung (2) aus demselben plattenartigen Werkstück, gegebenenfalls aus demselben Blech (22), wie das Handhabungsprodukt erzeugt wird.

2. Fertigungsverfahren nach Anspruch 1, **dadurch gekennzeichnet, dass** die Handhabungsvorrichtung (4) hergestellt wird, indem vor dem Erzeugen der Adapterplatte (17) an einer mit der Basiseinheit (21) versehenen Tragstruktur (9) der Handhabungsvorrichtung (4) wenigstens eine funktionsfähige Saugeinrichtung beliebiger Bauart angebracht wird und dass anschließend das plattenartige Werkstück, gegebenenfalls das Blech (22), aus dem später die Adapterplatte (17) erzeugt wird, mittels der funktionsfähigen Saugeinrichtung(en) an der Tragstruktur (9) der Handhabungsvorrichtung (4) festgelegt und mittels der Tragstruktur (9) der Handhabungsvorrichtung (4) zu der Trenneinrichtung (2) transportiert wird.

3. Fertigungsverfahren nach einem der vorhergehenden Ansprüche, **dadurch gekennzeichnet, dass** die Adapterplatte (17) an der Basiseinheit (21) der adaptiven Saugeinrichtung (14) angebracht wird, indem die Basiseinheit (21) mittels einer mit der Basiseinheit (21) versehenen Tragstruktur (9) der Handhabungsvorrichtung (4) zu der Adapterplatte (17) bewegt wird.

4. Fertigungsverfahren nach einem der vorhergehenden Ansprüche, **dadurch gekennzeichnet, dass** die Adapterplatte (17) an der Basiseinheit (21) der adaptiven Saugeinrichtung (14) lösbar, vorzugsweise mittels einer magnetischen Verbindung, angebracht wird.

5. Fertigungsverfahren nach einem der vorhergehenden Ansprüche, **dadurch gekennzeichnet, dass** die Handhabungsvorrichtung (4) hergestellt wird, indem die Adapterplatte (17) werkstückseitig mit einem Belag (18) versehen wird, vorzugsweise mit einem Belag (18), welcher die Aussparung(en) (19) der Adapterplatte (17) bei Anlage der Adapterplatte (17) an dem Handhabungsprodukt abdichtet.

6. Fertigungsverfahren nach Anspruch 5, **dadurch gekennzeichnet, dass** die Adapterplatte (17) werkstückseitig derart mit einem Belag (18) versehen wird, dass der Belag (18) die Aussparung(en) (19) der Adapterplatte (17) zumindest teilweise überdeckt und dass ein Belag (18) verwendet wird, der wenigstens in dem überdeckenden Bereich in Richtung auf den Unterdruckraum (20) der funktionsfähigen adaptiven Saugeinrichtung (14) durchlässig ist.

7. Fertigungsverfahren nach einem der vorhergehenden Ansprüche, **dadurch gekennzeichnet, dass** die Handhabungsvorrichtung (4) hergestellt wird, indem die Adapterplatte (17) erzeugt wird und/oder werkstückseitig mit einem Belag (18) versehen wird und dass gleichzeitig ein Handhabungsprodukt mittels der Handhabungsvorrichtung (4) gehandhabt wird.

8. Fertigungsverfahren nach einem der vorhergehenden Ansprüche, **dadurch gekennzeichnet, dass** die Handhabungsvorrichtung (4) hergestellt wird, indem die Adapterplatte (17) an der Basiseinheit (21) der adaptiven Saugeinrichtung (14) angebracht wird und/oder werkstückseitig mit einem Belag (18) versehen wird und dass gleichzeitig mittels der Trenneinrichtung (2) ein Handhabungsprodukt erzeugt wird.

## Claims

1. Production method, during which,
• by means of a separation processing operation using a separation device (2), a product to be manipulated is produced from a plate-like workpiece, in particular from a metal sheet (22), as a separated product to be manipulated, and
• the product to be manipulated is manipulated by means of a manipulation device (4) which has at least one suction device (13, 14) having a reduced pressure space (16, 20), the suction device (13, 14) and the product to be manipulated being placed one on the other and the product to be manipulated, owing to a reduced pressure which exists in the reduced pressure space (16, 20) of the suction device (13, 14) which is in abutment therewith, being retained on this suction device (13, 14),
• a manipulation device (4) having at least one adaptive suction device (14) being used,
• the adaptive suction device (14) and the product to be manipulated being placed one on the other over an adapter plate (17) of the adaptive suction device (14) which is arranged between the reduced pressure space (20) of the adaptive suction device (14) provided on a base unit (21) of the adaptive suction device (14) and the product to be manipulated and which has at least one recess (19) having a recess geometry which is adapted to the product to be manipulated in such a manner that the recess(es) (19) is/are covered by the product to be manipulated when the adaptive suction device (14) is placed on the product to be manipulated and the reduced pressure present in the reduced pressure space (20) of the adaptive suction device (14) acting via the recess(es) (19) of the adapter plate (17) on the product to be manipulated, and
• the manipulation device (4) being produced before the product to be manipulated is manipulated by means of the manipulation device (4) by the adapter plate (17) of the adaptive suction device (14) being produced with the recess geometry adapted to the product to be manipulated by means of a separation processing operation using the separation device (2) from a plate-like workpiece, in particular from a metal sheet (22), and being fitted to the base unit (21) of the adaptive suction device (14),
**characterised in that**
the manipulation device (4) is produced before the product to be manipulated is manipulated by means of the manipulation device (4) by the adapter plate (17) of the adaptive suction device (14) being produced with the recess geometry adapted to the product to be manipulated by means of a separation processing operation using the separation device (2) from the same plate-like workpiece, optionally from the same metal sheet (22) as the product to be manipulated.

2. Production method according to claim 1, **characterised in that** the manipulation device (4) is produced by, before the adapter plate (17) is produced, at least one operational suction device of any construction type being fitted to a carrier structure (9) of the manipulation device (4) provided with the base unit (21), and **in that** subsequently the plate-like workpiece, optionally the metal sheet (22), from which the adapter plate (17) is later produced, is secured to the carrier structure (9) of the manipulation device (4) by means of the operational suction device(s) and is transported to the separation device (2) by means of the carrier structure (9) of the manipulation device (4).

3. Production method according to either of the preceding claims, **characterised in that** the adapter plate (17) is fitted to the base unit (21) of the adaptive suction device (14) by the base unit (21) being moved towards the adapter plate (17) by means of a carrier structure (9) of the manipulation device (4) provided with the base unit (21).

4. Production method according to any one of the preceding claims, **characterised in that** the adapter plate (17) is fitted to the base unit (21) of the adaptive suction device (14) in a releasable manner, preferably by means of a magnetic connection.

5. Production method according to any one of the preceding claims, **characterised in that** the manipulation device (4) is produced by the adapter plate (17) being provided at the workpiece side with a lining (18), preferably with a lining (18) which seals the recess(es) (19) of the adapter plate (17) when the adapter plate (17) is in abutment with the product to be manipulated.

6. Production method according to claim 5, **characterized in that** the adapter plate (17) is provided at the workpiece side with a lining (18) in such a manner that the lining (18) at least partially covers the recess(es) (19) of the adapter plate (17), and **in that** a lining (18) is used which is permeable at least in the covering region in the direction towards the reduced pressure space (20) of the operational adaptive suction device (14).

7. Production method according to any one of the preceding claims, **characterised in that** the manipulation device (4) is produced by the adapter plate (17) being produced and/or being provided at the workpiece side with a lining (18) and **in that** at the same time a product to be manipulated is manipulated by means of the manipulation device (4).

8. Production method according to any one of the preceding claims, **characterised in that** the manipulation device (4) is produced by the adapter plate (17) being fitted to the base unit (21) of the adaptive suction device (14) and/or being provided at the workpiece side with a lining (18) and **in that** at the same time a product to be manipulated is produced by means of the separation device (2).

## Revendications

1. Procédé de fabrication, au cours duquel
- à partir d'une pièce du genre plaque, en particulier à partir d'une tôle (22), on fabrique par usinage coupant au moyen d'un équipement de coupe (2) un produit de coupe à manipuler sous la forme d'un produit à manipuler,
- et le produit à manipuler est manipulé au moyen d'un dispositif de manipulation (4) qui présente au moins un équipement d'aspiration (13, 14) pourvu d'une chambre à dépression (16, 20), sachant que l'équipement d'aspiration (13, 14) et le produit à manipuler sont appliqués l'un contre l'autre et que le produit à manipuler est maintenu contre cet équipement d'aspiration (13, 14) en raison d'une dépression qui règne dans la chambre à dépression (16, 20) de l'équipement d'aspiration (13, 14) appliqué contre ledit produit,
- sachant qu'on utilise un dispositif de manipulation (4) pourvu d'au moins un équipement d'aspiration adaptatif (14),
- sachant que l'équipement d'aspiration adaptatif (14) et le produit à manipuler sont appliqués l'un contre l'autre au moyen d'une plaque adaptatrice (17) de l'équipement d'aspiration adaptatif (14), qui est disposée entre le produit à manipuler et la chambre à dépression (20) de l'équipement d'aspiration adaptatif (14) prévue sur une unité de base (21) de l'équipement d'aspiration adaptatif (14), et qui présente au moins un évidement (19) ayant une géométrie d'évidement qui est adaptée au produit à manipuler de telle sorte que le ou les évidement(s) (19) est ou sont recouvert(s) par le produit à manipuler lorsque l'équipement d'aspiration adaptatif (14) est appliqué contre le produit à manipuler, et que la dépression régnant dans la chambre à dépression (20) de l'équipement d'aspiration adaptatif (14) agit sur le produit à manipuler par l'intermédiaire du ou des évidement(s) (19) de la plaque adaptatrice (17),
- et sachant que, avant que le produit à manipuler soit manipulé au moyen du dispositif de manipulation (4), on fabrique le dispositif de manipulation (4) par le fait que la plaque adaptatrice (17) de l'équipement d'aspiration adaptatif (14), dotée de la géométrie d'évidement adaptée au produit à manipuler, est fabriquée par usinage coupant au moyen de l'équipement de coupe (2) à partir d'une pièce du genre plaque, en particulier à partir d'une tôle (22), et est installée sur l'unité de base (21) de l'équipement d'aspiration adaptatif (14),
**caractérisé en ce que**, avant que le produit à manipuler soit manipulé au moyen du dispositif de manipulation (4), on fabrique le dispositif de manipulation (4) par le fait que la plaque adaptatrice (17) de l'équipement d'aspiration adaptatif (14), dotée de la géométrie d'évidement adaptée au produit à manipuler, est fabriquée par usinage coupant au moyen de l'équipement de coupe (2) à partir de la même pièce du genre plaque, le cas échéant à partir de la même tôle (22), que le produit à manipuler.

2. Procédé de fabrication selon la revendication 1, **caractérisé en ce qu'**on fabrique le dispositif de manipulation (4) par le fait que, avant de fabriquer la plaque adaptatrice (17), on installe sur une structure porteuse (9) du dispositif de manipulation (4) pourvue de l'unité de base (21) au moins un équipement d'aspiration fonctionnel de type quelconque, et que la pièce du genre plaque, le cas échéant la tôle (22), à partir de laquelle sera ultérieurement fabriquée la plaque adaptatrice (17), est ensuite fixée en position au moyen du ou des équipement(s) d'aspiration fonctionnel(s) à la structure porteuse (9) du dispositif de manipulation (4), et est transportée vers l'équipement de coupe (2) au moyen de la structure porteuse (9) du dispositif de manipulation (4).

3. Procédé de fabrication selon l'une des revendications précédentes, **caractérisé en ce que** la plaque adaptatrice (17) est installée sur l'unité de base (21) de l'équipement d'aspiration adaptatif (14) par le fait que l'unité de base (21) est déplacée vers la plaque adaptatrice (17) au moyen d'une structure porteuse (9) du dispositif de manipulation (4) pourvue de l'unité de base (21).

4. Procédé de fabrication selon l'une des revendications précédentes, **caractérisé en ce que** la plaque adaptatrice (17) est installée de manière amovible sur l'unité de base (21) de l'équipement d'aspiration adaptatif (14), de préférence au moyen d'une liaison magnétique.

5. Procédé de fabrication selon l'une des revendications précédentes, **caractérisé en ce qu'**on fabrique le dispositif de manipulation (4) par le fait que la plaque adaptatrice (17) est pourvue côté pièce d'un revêtement (18), de préférence d'un revêtement (18) qui assure l'étanchéité du ou des évidement(s) (19) de la plaque adaptatrice (17) lors de l'application de la plaque adaptatrice (17) contre le produit à manipuler.

6. Procédé de fabrication selon la revendication 5, **caractérisé en ce que** la plaque adaptatrice (17) est pourvue côté pièce d'un revêtement (18) de telle sorte que le revêtement (18) recouvre au moins partiellement le ou les évidement(s) (19) de la plaque adaptatrice (17), et **en ce qu'**on utilise un revêtement (18) qui, au moins dans la région de recouvrement, est perméable en direction de la chambre à dépression (20) de l'équipement d'aspiration adaptatif fonctionnel (14).

7. Procédé de fabrication selon l'une des revendications précédentes, **caractérisé en ce qu'**on fabrique le dispositif de manipulation (4) par le fait qu'on fabrique la plaque adaptatrice (17) et/ou qu'on la dote côté pièce d'un revêtement (18), et **en ce qu'**on manipule en même temps au moyen du dispositif de manipulation (4) un produit à manipuler.

8. Procédé de fabrication selon l'une des revendications précédentes, **caractérisé en ce qu'**on fabrique le dispositif de manipulation (4) par le fait qu'on installe la plaque adaptatrice (17) sur l'unité de base (21) de l'équipement d'aspiration adaptatif (14) et/ou qu'on la dote côté pièce d'un revêtement (18), et **en ce qu'**on fabrique en même temps au moyen de l'équipement de coupe (2) un produit à manipuler.
